# DEMANDE DE BREVET EUROPEEN

(11) **EP 0 726 198 A2**
(43) Date de publication de la demande: **14.08.1996**
(21) Numéro de dépôt: 96400298.4
(22) Date de dépôt: 13.02.1996
(51) Int. Cl.: B62K 25/00

(54) **Dispositif de suspension de véhicule à roue avant directrice, et véhicule correspondant**

(30) Priorité: 13.02.1995 FR 9501614
(71) Demandeur: PEUGEOT MOTOCYCLES, F-25350 Beaulieu Mandeure (FR); Offenstadt, Eric, 95520 Osny (FR)
(72) Inventeur: Offenstadt, Eric, 95520 Osny (FR)
(74) Mandataire: Habasque, Etienne Joel Jean-François

(57) **Abrégé**

Un dispositif de suspension de véhicule à roue avant directrice 7 comporte un bras de support 8 de l'axe de rotation 6 de ladite roue avant directrice 7, une colonne de direction 3 de ladite roue avant directrice et un moyen amortisseur à ressorts 8.

Le dispositif comporte des moyens 9-18 mécaniques aptes à faire varier les angles formés par l'axe géométrique D de la colonne de direction 3 et par l'axe géométrique dudit bras de support 8 de l'axe de rotation 6 de la roue 7 lors de la compression dudit moyen amortisseur à ressort 8.

## Description

L'invention est relative à un dispositif de suspension de véhicule à roue avant directrice, ainsi qu'à un véhicule à roue avant directrice équipé d'un tel dispositif.

L'invention est particulièrement utile dans l'application aux cycles et motocycles tels que motocyclette, cyclomoteur, scooter, side-car, et autres véhicules à roue avant directrice comportant une suspension.

Dans ces véhicules de type connu, la roue arrière est montée sur un bras oscillant et est susceptible de se déplacer selon un arc de cercle, dont le rayon correspond à la longueur du bras oscillant et la roue avant est montée sur une fourche de support solidaire et fixe de la colonne de direction du véhicule.

Dans la conduite à grande vitesse et en particulier dans les virages, les mouvements relatifs des axes de rotations des roues provoquent une variation d'empattement de la roue avant : ces mouvements des axes d'avant en arrière induisent des accélérations et des décélérations des points de contact des roues avec le sol et provoquent ainsi des pertes d'adhérence susceptibles de provoquer des accidents.

Le document FR-2 495 093 relatif à une invention du déposant de la présente demande décrit une motocyclette du type comportant un axe de roue arrière qui est porté par au moins un bras de suspension disposé dans un plan vertical et longitudinal situé sur un côté de la motocyclette et qui est monté géométriquement oscillant suivant un mouvement circulaire autour d'un axe transversal géométrique fixe, par rapport au cadre de la motocyclette. Un organe de suspension est interposé entre ledit bras de suspension et ledit cadre, et une transmission à chaîne relie un pignon d'entraînement et un pignon de roue solidaire de cette roue arrière. L'axe géométrique d'oscillation de l'axe de roue arrière est, dans la position de repos, et non chargée de la motocyclette, disposé dans le même plan que l'axe de la roue arrière et l'axe du pignon d'entraînement en étant situé en avant de cet axe du pignon d'entraînement. Grâce à cet agencement, la roue arrière est plaquée au sol, ce qui augmente son adhérence et, en outre, la motocyclette a tendance à se relever lors des accélérations, ce qui permet de monter des organes de suspension et d'amortissement souples et confortables.

Le document FR-2 495 093 constitue un perfectionnement aux motocyclettes à suspension arrière, mais n'apporte aucune solution au problème de variation de la chasse de la roue avant directrice et ne permet pas d'augmenter l'adhérence de cette roue avant directrice.

L'invention a pour but de remédier aux inconvénients de la technique connue, en fournissant un nouveau dispositif de suspension de véhicule fournissant une excellente stabilité en particulier en virage, en entrée de virage et lors du freinage, c'est-à-dire lorsque le véhicule est en déport de charge sur l'avant, ou demi-écrasé sur sa suspension, en virage.

L'invention a pour objet un dispositif de suspension de véhicule à roue avant directrice, du type comportant un bras de support, ce bras de suspension pouvant également constituer lui-même l'axe de direction de l'axe de rotation de ladite roue avant directrice, une colonne de direction de ladite roue avant directrice et un moyen amortisseur à ressort, caractérisé en ce que le dispositif comporte des moyens mécaniques aptes à faire varier l'angle formé par l'axe géométrique de la colonne de direction et par l'axe géométrique dudit bras de support de l'axe de rotation de la roue lors de la compression dudit moyen amortisseur à ressort, et agencés pour imposer à l'axe de rotation de la roue une trajectoire sensiblement verticale correspondant à une courbe aplatie avec point d'inflexion.

Selon d'autres caractéristiques de l'invention :
- lesdits moyens mécaniques comportent au moins une articulation mobile à la fois par rapport au bras de support et par rapport à la colonne de direction ;
- le bras de support est un bras télescopique contenant ledit moyen amortisseur à ressort ;
- les moyens mécaniques comprennent des moyens du genre levier, came, excentrique, glissière ou autres moyens mécaniques permettant de faire varier l'angle formé par l'axe géométrique de la colonne de direction et l'axe géométrique du bras de support de la roue ;
- lesdits moyens mécaniques comportent au moins un levier monté pivotant sur ledit bras de support et attelé à une bielle ou tirant ;
- ledit levier est attelé en sa partie médiane à une extrémité du bras de support, et les extrémités dudit levier sont attelées à une biellette reliée à la colonne de direction et à une bielle reliée à l'autre extrémité du bras de support ;
- ledit levier est attelé au fourreau du moyen amortisseur, à une biellette de liaison reliée à la colonne de direction et à une bielle de liaison reliée à la tige du moyen amortisseur ;
- lesdits moyens mécaniques comportent deux leviers et deux bielles ou tirants de liaison reliant un bras de support de longueur fixe à un moyen amortisseur à ressort et à la colonne de direction ;
- au moins une bielle ou tirant de liaison est réglable en longueur ;
- lesdits moyens mécaniques sont agencés pour diminuer la chasse du véhicule en cours de la compression du moyen amortisseur ;

L'invention a également pour objet un véhicule à roue avant directrice équipé d'un dispositif selon l'invention.

L'invention sera mieux comprise grâce à la description qui va suivre donnée à titre d'exemple non limitatif en référence aux dessins annexés dans lesquels :
La figure 1 représente schématiquement une vue en élévation latérale d'un véhicule à roue directrice selon l'invention ;
La figure 2 représente schématiquement une vue avec coupe partielle d'un premier mode de réalisation selon l'invention ;
Les figures 3 à 5 représentent schématiquement le fonctionnement du dispositif selon l'invention de la figure 2 ;
Les figures 6 à 8 correspondent respectivement aux figures 3 à 5 et constituent des schémas cinématiques explicatifs du déplacement des organes du dispositif selon l'invention de la figure 2 ;
La figure 9 représente schématiquement une vue avec coupe partielle d'un deuxième mode de réalisation de dispositifs selon l'invention ;
La figure 10 représente schématiquement un troisième mode de réalisation d'un dispositif selon l'invention ;
La figure 11 représente schématiquement le troisième mode de réalisation d'un dispositif de la figure 10 dans une position de report de charge sur l'avant.
Les figures 12 à 14 représentent d'autres modes de réalisation de dispositifs selon l'invention.

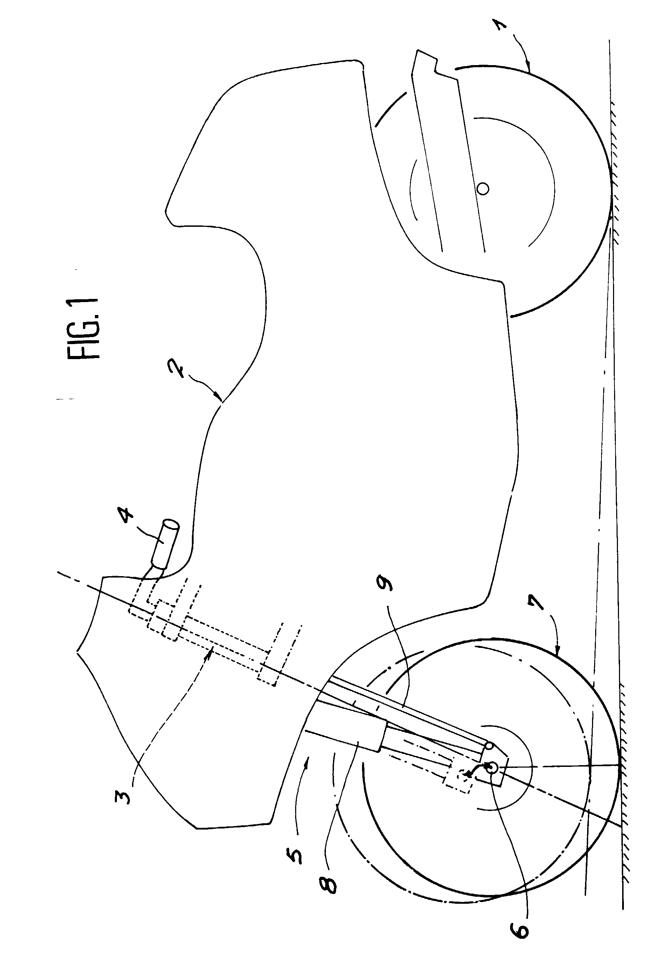

En référence à la figure 1, un véhicule à roue du genre motocyclette comporte une roue arrière 1 montée de manière connue en soi sur un bras oscillant relié au corps de la motocyclette, une colonne de direction 3 représentée en traits pointillés et portant à sa partie supérieure un organe de direction 4 du genre guidon et dispositif 5 selon l'invention reliant la colonne de direction 3 à l'axe 6 de la roue avant 7.

Le dispositif selon l'invention comporte un bras de support coulissant 8 et une bielle de longueur réglable 9 ou similaire. Le dispositif 5 selon l'invention est agencé de manière que l'axe de rotation 6 de la roue avant directrice 7 subisse un mouvement de déplacement sensiblement vertical lors de la compression de la suspension entre une position étendue représentée en traits pleins et une position comprimée représentée en traits pointillés.

Suivant l'invention, l'axe de rotation 6 décrit une courbe aplatie, (par exemple en forme de S) comportant un point d'inflexion dans sa partie médiane : au début du freinage, l'axe de rotation 6 recule légèrement vers l'arrière au début de la compression de l'amortisseur jusqu'à une position dans laquelle le mouvement devient sensiblement vertical ; puis, l'axe de rotation recule à nouveau vers l'arrière jusqu'à atteindre la compression maximale de la suspension. Grâce à cette disposition, le débattement de l'axe 6 de rotation de la roue avant 7 est sensiblement vertical et l'empattement (ou distance des points de contact des roues 1 et 7 avec le sol) reste sensiblement constant.

L'invention permet ainsi de remédier aux inconvénients de la technique connue : en effet, sur les véhicules actuels on constate lors du freinage une plongée violente de l'avant des véhicules jusqu'à venir éventuellement en butée de compression de la suspension ; également, lorsqu'une motocyclette est en déport de charge sur l'avant au freinage ou en entrée de virage, son comportement est instable et sa maniabilité réduite ; l'invention remédie à cet inconvénient en diminuant la compression de la suspension pour un même taux de freinage et en réduisant la chasse en fin de compression de la suspension ; d'autre part, à mi-compression en maintenant l'empattement constant, l'invention réduit notablement le recul de l'axe de roue sur les bosses ou sur terrain difficile et supprime tout risque d'accélération ou décélération parasite du pneumatique au sol susceptible de causer une usure, une surchauffe ou des pertes d'adhérence et des louvoiements de la roue avant.

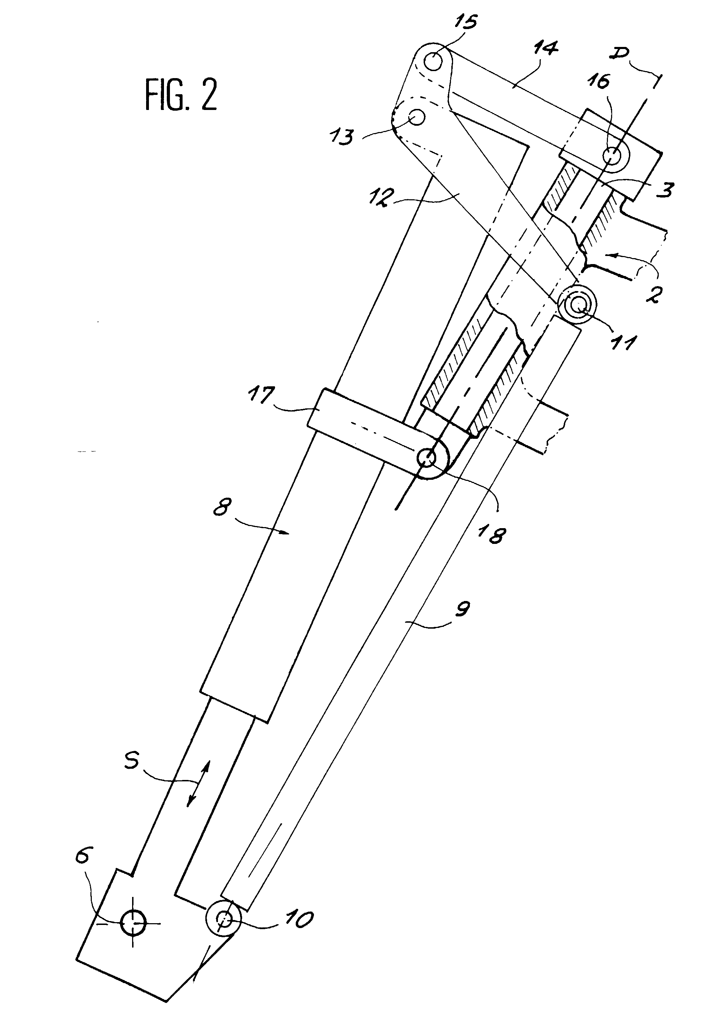

En référence à la figure 2, les éléments de repères identiques aux éléments de la figure 1 sont identiques ou fonctionnellement équivalents aux éléments de la figure 1.

Le dispositif selon l'invention monté entre la colonne de direction 3 et l'axe de rotation de la roue 6 comporte un bras amortisseur télescopique 8 et une bielle 9 de liaison de longueur réglable dont l'extrémité inférieure est articulée sur un axe 10 solidaire du bras télescopique 8. L'extrémité supérieure de la bielle 9 est articulée en 11 à un levier mobile 12 monté à rotation sur un axe 13 solidaire du bras télescopique 8 et actionnant par son autre extrémité une biellette 14 montée articulée en 15 et en 16 respectivement sur ledit levier 12 et sur la colonne de direction 3.

La colonne de direction 3 est articulée d'une part avec la biellette 14 en 16 et d'autre part avec un organe 17 solidaire du bras télescopique 8 au moyen d'un axe de rotation 18.

Le prolongement de l'axe géométrique D de la colonne de direction 3 définit avec le point de contact du pneumatique de la roue avant 7 une distance appelée "chasse" par l'homme du métier.

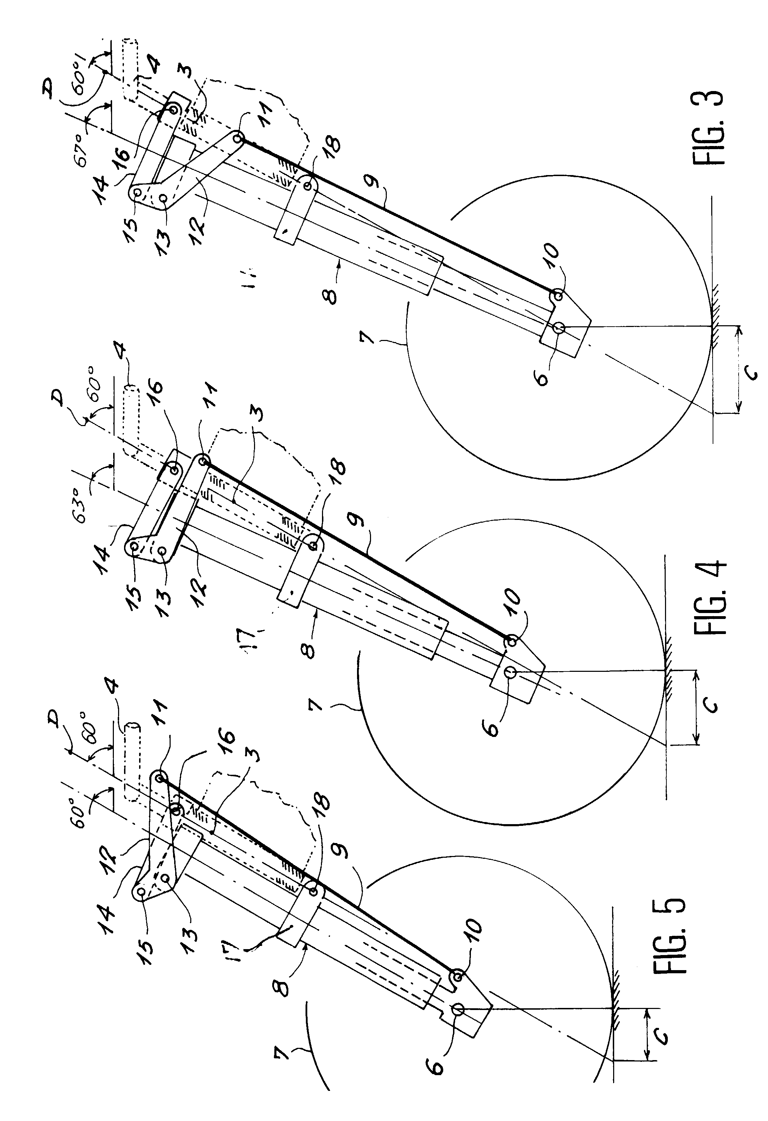

En référence à la figure 3, un dispositif selon l'invention est représenté dans une position correspondant à la longueur maximale du bras de suspension 8. Cette longueur maximale est obtenue à l'accélération sur une route plane et horizontale.

Dans cette position, l'axe géométrique du bras de suspension télescopique 8 et l'axe géométrique de la colonne de direction 3 se croisent au voisinage de l'axe 6 de rotation de la roue avant 7. L'extrémité du levier 12 correspondant à l'axe d'articulation 11 sur la bielle de liaison 9 est dans une position abaissée, dans laquelle la transmission des vibrations de la route par le bras de suspension 8 à la colonne de direction 3 sont très fortement amorties. Le comportement dynamique de ce dispositif est donc analogue à celui d'une suspension très souple en raison du recul vers l'arrière de l'axe de rotation 6 de la roue avant 7.

En référence à la figure 4, en présence d'un faible enfoncement résultant par exemple de l'écrasement de la suspension en virage, la suspension se comprime et l'angle formé par l'axe géométrique de la colonne de direction et l'axe géométrique du bras de suspension télescopique varie dans le sens d'une diminution, tandis que le point d'intersection des deux axes géométriques précités se situe en dessous de l'axe de rotation 6 de la roue avant 7.

La chasse C diminue, ce qui augmente la maniabilité du véhicule en courbe ou en entrée de courbe. Cette réduction de chasse C s'effectue à empattement sensiblement constant, de sorte qu'il n'existe aucun mouvement parasite parallèle au sol de l'axe de roues avant par rapport au centre d'inertie du véhicule. En l'absence de ces mouvements parasites, les pneumatiques ne subissent aucune accélération différentielle dans leur contact avec le sol et ils subissent pas conséquent aucune usure, surchauffe ou perte d'adhérence rencontrée dans l'état de la technique connu.

Dans cette disposition, le bras le plus long du levier 12 situé entre les axes d'articulation 11 et 13 est pratiquement parallèle à la biellette 14 reliant les articulations 15 et 16 : le mouvement est pratiquement linéaire et la transmission de l'effort de compression du bras télescopique 8 à la colonne de direction 3 est transmise par le levier 12 et la biellette 14.

En référence à la figure 5, lors d'un choc brutal instantané lors d'un freinage très important, le bras de suspension télescopique 8 est comprimé dans une position correspondant à la longueur minimale du bras de suspension 8.

Dans cette position, la chasse C est réduite au minimum et la maniabilité du véhicule est encore améliorée ; les axes géométriques de la colonne de direction et du bras de suspension 8 sont sensiblement parallèles l'un à l'autre, ce qui augmente le déport des masses directionnelles et favorise l'auto-braquage de l'avant du véhicule.

L'invention procure les avantages suivants : grâce à la chasse importante de la figure 3 correspondant à une vitesse de croisière constante ou une accélération, la conduite de la motocyclette ou véhicule à roue avant directrice est caractérisée par une grande stabilité ; lors d'un freinage modéré ou sous l'effet de la force centrifuge dans un virrage, on constate une augmentation de l'inertie directionnelle de la roue ayant pour résultat de faire tourner l'ensemble de la roue et du dispositif selon l'invention du côté où l'utilisateur penche la motocyclette ou le véhicule selon l'invention lors d'un freinage important ou lors de l'entrée en virage, la réduction de chasse C de la figure 5 est encore plus importante et la maniabilité s'en trouve encore améliorée. Le phénomène de plongée de la partie avant du véhicule est en outre relativement faible en raison du fait que le mouvement pratiquement vertical de l'axe 6 de rotation de la roue avant 7 a pour conséquence la conservation de l'empattement, ce qui a pour effet de permettre un amortissement plus souple et une adhérence meilleurs que dans les véhicules de l'art antérieur.

En outre, l'articulation 10 de la bielle 9 située en arrière de l'axe de rotation 6 absorbe une partie de l'effort de torsion dû au freinage et procure un coulissement amélioré du bras de suspension 8 télescopique.

Les angles formés par l'axe géométrique D de la colonne de direction 3 et par l'axe géométrique du bras de suspension 8 avec la direction horizontale sont représentés à titre purement indicatif et pourront être modifiés à volonté par l'homme du métier selon l'usage du véhicule (tourisme, parcours accidenté, compétition sur circuit). L'invention couvre également toutes variantes dans lesquelles la position normale au repos sur route correspondrait à la figure 4 ou à la figure 5: en effet, suivant le type d'utilisation on peut préférer assurer une grande absorption des bosses à l'accélération ou à grande vitesse en prévoyant une chasse importante assurant une bonne stabilité ; on peut également dans le cadre d'utilisations sportives ou de compétitions, régler le déport, la chasse et l'anti-plongée indépendamment de l'angle de chasse de départ par un réglage manuel de la longueur de la bielle 9. Dans l'art antérieur, un tel réglage n'est pas possible en raison du fait que l'angle de chasse est strictement défini par les caractéristiques géométriques du véhicule.

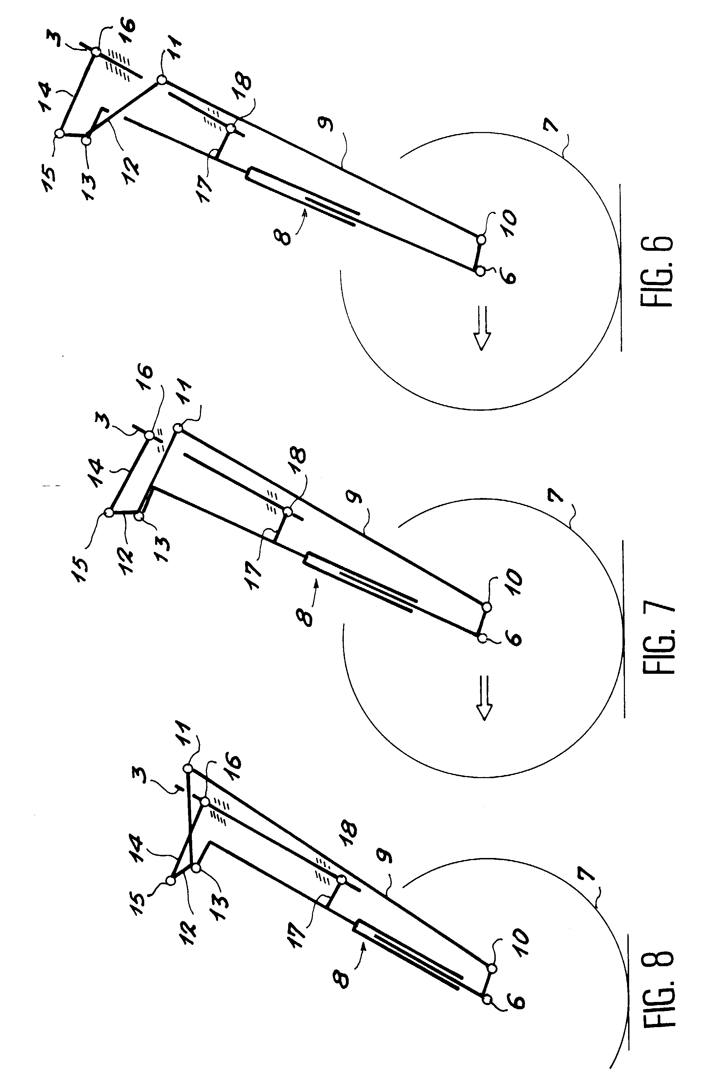

Les figures 6 à 8 correspondent respectivement aux figures 3 à 5 et décrivent schématiquement des déplacements cinématiques des différents organes articulés du dispositif selon l'invention de la figure 2. Ces déplacements correspondent au cas d'un véhicule destiné à une utilisation de tourisme.

Bien entendu, l'invention couvre également toutes variantes d'adaptation sur une motocyclette ou un véhicule existant d'un dispositif selon l'invention.

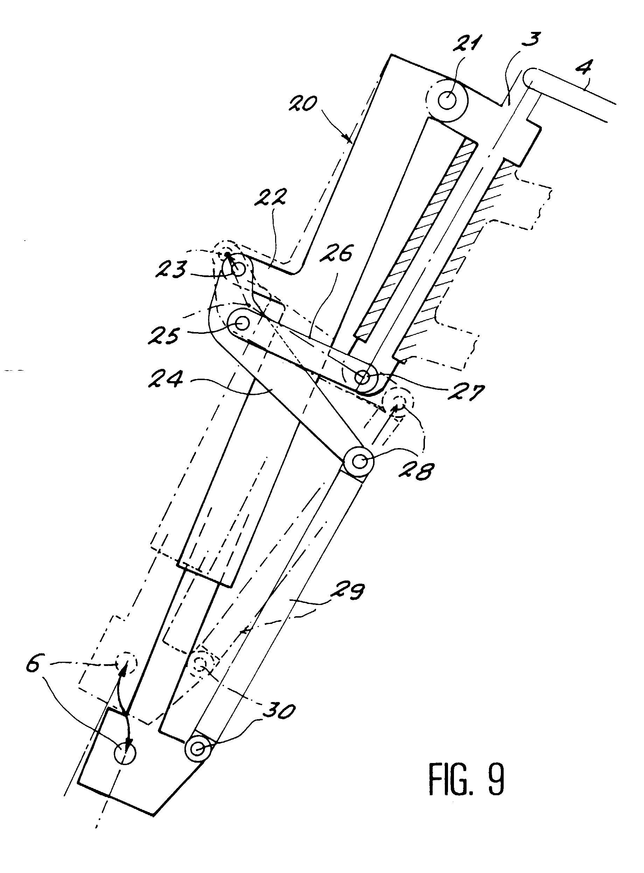

En référence à la figure 9, un deuxième mode de réalisation de dispositif selon l'invention adaptable à une colonne de direction 3 commandée par un guidon ou organe de direction 4 comporte un bras de suspension télescopique 20 portant à son extrémité inférieure l'axe de rotation 6 d'une roue avant directrice d'un véhicule selon l'invention. Le bras de suspension télescopique 20 est articulé à son extrémité supérieure sur un axe 21 d'articulation entre la colonne de direction 3 et le bras télescopique 20.

Une excroissance 22 solidaire du fourreau du bras télescopique 20 porte à son extrémité un axe 23 d'articulation et de commande d'un levier 24. Le levier 24 est attelé par une articulation 25 à une biellette 26 à l'autre extrémité de laquelle est articulée la colonne de direction 3 sur l'axe d'articulation 27. L'extrémité du levier 24 opposée à l'axe 23 est articulée en 28 sur une bielle 29 de longueur réglable dont l'autre extrémité est attelée à un axe d'articulation 30, solidaire de la tige constituant la partie inférieure du bras télescopique 20.

Dans le mouvement de compression analogue à celui décrit en référence aux figures 3 à 8, l'axe de rotation 6 de la roue avant directrice se déplace sensiblement suivant la verticale en suivant une courbe aplatie en S comportant un point d'inflexion dans sa partie médiane.

Cette variante de l'invention procure les mêmes résultats et avantages techniques que le mode de réalisation décrit en référence aux figures 2 à 8 et procure l'avantage supplémentaire d'une meilleure visibilité au niveau de l'organe de direction 4 et d'un abaissement du centre de gravité du véhicule selon l'invention. La stabilité et la visibilité sont ainsi améliorées par rapport au mode de réalisation de la figure 2.

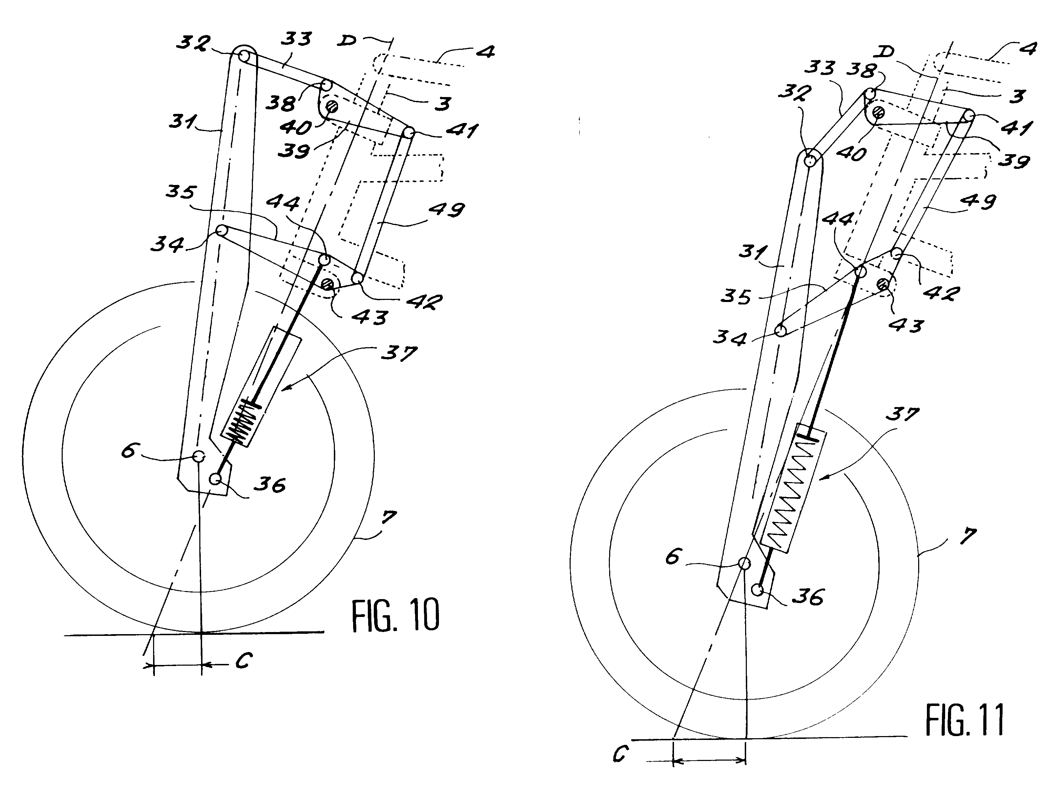

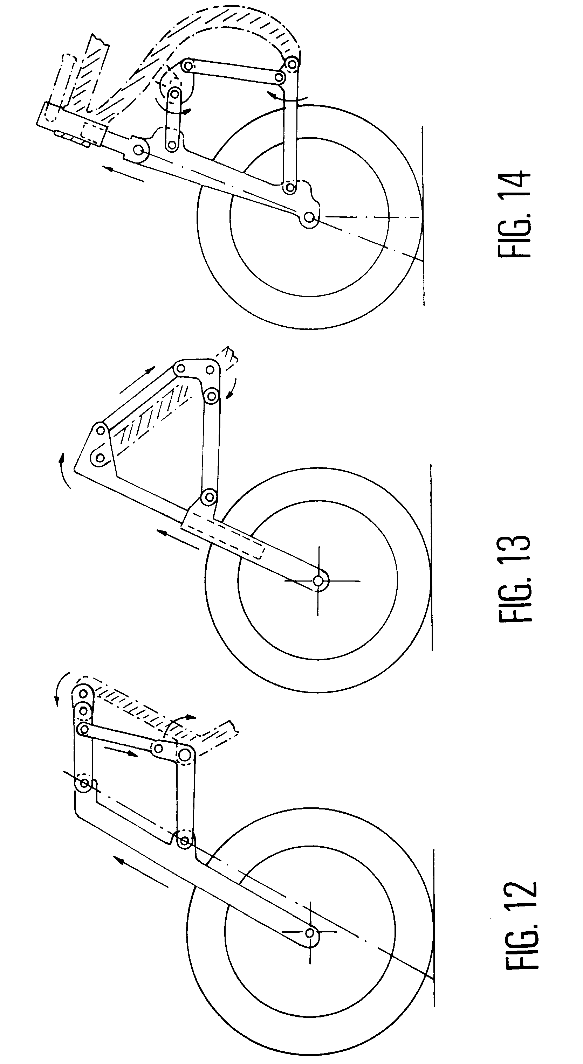

En référence aux figures 10 et 11, un troisième mode de réalisation de l'invention comporte un bras de support de longueur fixe 31 supportant à son extrémité inférieure l'axe de rotation 6 de la roue avant 7. Le bras de support 31 est attelé en 32 à une biellette 33, en 34 à un levier 35 et en 36 à un moyen amortisseur à ressort 37. La biellette 33 est articulée en 38 avec un deuxième levier 39 monté pivotant en 40 sur la colonne de direction 3. L'extrémité du deuxième levier 39 est reliée à l'extrémité du premier levier 35 par un tirant 49 de longueur réglable monté sur deux rotules d'articulation 41 et 42. Le tirant 49 pourrait également s'articuler directement sur la biellette 33 en permettant ainsi de réduire la taille du levier 39.

Le premier levier 35 est également monté pivotant en 43 à l'extrémité inférieure de la colonne de direction 3, tandis que la tige du moyen amortisseur 37 est articulée en 44 sur ledit premier levier 35.

Grâce à la transmission de mouvements effectués par la biellette 33 et le tirant 49, l'écrasement du moyen amortisseur 37 résultant d'un déport de charge vers l'avant provoque un pivotement simultané des deux leviers 35 et 39 et fait ainsi varier l'angle formé par l'axe géométrique D de la colonne de direction 3 et par l'axe géométrique du bras support 31 de longueur fixe, en réduisant ainsi la chasse C lors de l'écrasement de la suspension correspondant à la compression du moyen amortisseur 37 et en conservant sensiblement l'empattement du véhicule selon l'invention.

Ce troisième mode de réalisation de l'invention est avantageux en ce qu'il permet l'adaptation d'un dispositif selon l'invention sur des véhicules ou motocyclettes de l'art antérieur en remplacement d'une suspension de l'art antérieur qui présentait notamment l'inconvénient d'un effet de plongée vers l'avant lors d'un freinage important.

L'invention décrite de manière non limitative en référence à trois modes de réalisation particuliers n'y est nullement limitée mais couvre au contraire toutes modifications de forme et toutes variantes de réalisation dans le cadre et l'esprit de l'invention, l'essentiel étant de disposer de moyens du genre levier, came, excentrique, glissière ou autres moyens mécaniques permettant de faire varier l'angle formé par l'axe géométrique de la colonne de direction D et l'axe géométrique du bras de support de la roue correspondante, cette variation étant obtenue de manière automatique lors de l'écrasement de la suspension résultant d'un déport de charge dû à des reliefs du sol ou à des changements de régime (freinage, virage) du véhicule selon l'invention, pour obtenir une courbe aplatie avec point d'inflexion comme trajectoire de l'axe de rotation de la roue.

A titre d'exemples, la figure 12 représente un dispositif de suspension selon l'invention appliqué à une suspension de type APRILIA (marque déposée) ou de conception FIOR (inventeur français) ; la figure 13 représente un dispositif de suspension selon l'invention appliqué à une suspsension du type BMW (marque déposée) ; la figure 14 représente un dispositif de suspension selon l'invention appliqué à une suspension de type YAMAHA (marque déposée).

## Revendications

1. Dispositif de suspension de véhicule à roue avant directrice (7), du type comportant un bras de support (8, 20, 31), de l'axe de rotation (6) de ladite roue avant directrice (7), une colonne de direction (3) de ladite roue avant directrice (7) et un moyen amortisseur à ressort (8, 20, 37), ainsi que des moyens mécaniques comprenant des moyens du genre levier, came, excentrique, glissière ou autres moyens mécaniques permettant de faire varier l'angle formé par l'axe géométrique (D) de la colonne de direction (3) et l'axe géométrique du bras (8, 20, 31) de support de l'axe de rotation (6) la roue (7) caractérisé en ce que : en conclusion lesdits moyens (9-18, 21-30, 32-44) mécaniques comportent au moins une articulation (15, 25, 38) mobile à la fois par rapport au bras de support (8, 20, 31) et par rapport à la colonne de direction (3) lors de la compression dudit moyen amortisseur à ressort (8, 20, 37) sous l'action d'au moins un levier (12, 24, 35) monté pivotant sur ledit bras (8, 20, 31) de support et attelé à une bielle ou tirant (9, 29, 40) et sont agencés pour imposer à l'axe de rotation (6) de la roue (7) une trajectoire sensiblement verticale correspondant à une courbe aplatie en S avec un point d'inflexion.

2. Dispositif selon la revendication 1, caractérisé en ce que le bras de support (8, 20) est un bras télescopique contenant ledit moyen amortisseur à ressort.

3. Dispositif selon la revendication 1 ou 2, caractérisé en ce ledit levier (12) est attelé en sa partie médiane à une extrémité (13) du bras de support et caractérisé en ce que les extrémités (11, 15) dudit levier sont attelées à une biellette (14) reliée (16) à la colonne de direction (3) et à une bielle (9) reliée à l'autre extrémité (10) du bras de support (8).

4. Dispositif selon la revendication 2 ou la revendication 3, caractérisé en ce que ledit levier r (24) est attelé (25) au fourreau du moyen amortisseur (20), à une biellette (26) de liaison reliée à la colonne de direction (3) et à une bielle (29) de liaison reliée (30) à la tige du moyen amortisseur.

5. Dispositif selon l'une des revendications précédentes, caractérisé en ce que lesdits moyens mécaniques (32-44) comportent deux leviers (35, 39) et deux bielles (33, 40) ou tirants de liaison reliant un bras de support (31) de longueur fixe à un moyen amortisseur à ressort (37) et à la colonne de direction (3).

6. Dispositif selon l'une quelconque des revendications 2 à 5, caractérisé en ce qu'au moins une bielle ou tirant de liaison est réglable en longueur.

7. Dispositif selon l'une quelconque des revendications précédentes, caractérisé en ce que lesdits moyens mécaniques (9-18, 21-30, 32-44) sont agencés pour diminuer la chasse (C) du véhicule en cours de la compression du moyen amortisseur (8, 20, 37).
